# EUROPÄISCHE PATENTSCHRIFT

(11) **EP 2 225 133 B1**
(45) Veröffentlichungstag und Bekanntmachung des Hinweises auf die Patenterteilung: **19.02.2014**
(21) Anmeldenummer: 08867258.9
(22) Anmeldetag: 22.12.2008
(51) Int. Cl.: B60T 8/00, B60T 8/32, B60T 8/42, B60T 8/48, B60T 8/44

(54) **BREMSSYSTEM MIT ADAPTIV STEUERBAREM BREMSBELAGLÜFTSPIEL**
BRAKE SYSTEM WITH ADAPTIVELY CONTROLLABLE BRAKE LINING CLEARANCE
SYSTÈME DE FREINAGE À JEU DE GARNITURE DE FREIN ADAPTABLE

(30) Priorität: 21.12.2007 DE 102007062839; 14.08.2008 DE 102008051316
(43) Veröffentlichungstag der Anmeldung: 08.09.2010
(73) Patentinhaber: IPGATE AG, 8808 Pfäffikon SZ (CH)
(72) Erfinder: LEIBER, Heinz, 71739 Oberriexingen (DE); UNTERFRAUNER, Valentin, 80935 München (DE)
(74) Vertreter: Lenzing Gerber Stute
(86) Internationale Anmeldenummer: PCT/EP2008/011020
(87) Internationale Veröffentlichungsnummer: WO 2009/083216

(56) Entgegenhaltungen:
- EP-A- 0 436 926
- EP-A- 0 703 133
- WO-A-2006/111393
- DE-A1- 19 601 434
- DE-A1- 19 916 700

## Beschreibung

Die Erfindung betrifft ein hydraulisch wirkendes Bremssystem mit einem Hauptbremszylinder, dessen mindestens einer Arbeitsraum über mindestens eine Hydraulikleitung mit den Radbremsen des Fahrzeugs verbunden ist, laut Oberbegriff des Anspruchs 1.

Ein gattungsgemäßes Bremssystem ist aus WO-2006/111393-A1 bekannt.

Nach einer Bremsung, insbesondere bei Bremssystemen mit Scheibenbremsen, entsteht eine Restbremswirkung, da die Rückstell-kräfte am Bremskolben nicht ausreichen, um die Bremsbeläge genügend weit von der Bremsscheibe abzuheben. Zur Lösung dieses Problems wurde u.a. eine Roll-Back-Dichtung entwickelt, die den Bremskolben und mit ihm den Bremsbelag von der Bremsscheibe nach dem beendeten Bremsvorgang weg bewegt. Allerdings ist das Roll-Back-Vermögen des Dichtringes auf den Bremskolben beschränkt und reicht nicht aus, Verschmutzungen, Alterung und elastische Verformungen im Bremssattel und Reibbelägen voll auszugleichen. Abhilfen mit einem Luftspalt zwischen Bremsbelag und Bremsscheibe/Bremskolben sind in DE 44 18 701 und DE 196 01 434 beschrieben. Die vorgeschlagenen Lösungen gemäß der vorgenannten Druckschriften wurden bisher nicht eingeführt, da der zusätzliche Aufwand im Verhältnis zur Wirkung unbefriedigend ist und zudem durch das eingestellte Luftspiel beim anschließenden Bremsen ein Pedalwegverlust eintritt, wodurch nachteilig die Bremswege bei Vollbremsungen länger werden.

Nach aktuellem Entwicklungsstand der Bremsen haben Mittelklassefahrzeuge auf dem Prüfstand zur Ermittlung der NEFZ-Verbräuche einen zusätzlichen Verbrauch von ca. 0,251 = 6g CO₂/km durch die o.g. Restbremswirkung. Dieser Wert gilt für ein Neufahrzeug ohne Alterungseinflüsse und ist beträchtlich in Anbetracht der zukünftigen CO₂-Ziele.

Aufgabe der vorliegenden Erfindung ist es daher, ein hydraulisch wirkendes Bremssystem dahingehend weiter zu entwickeln, dass die Restbremswirkung sicher vermieden wird.

Diese Aufgabe wird erfindungsgemäß dadurch gelöst, dass mittels Unterdruck in der Hydraulikzuführleitung einer Radbremse ein Lüftspiel erzeugbar bzw. einstellbar ist. Weitere vorteilhafte Ausgestaltungen des erfindungsgemäßen Bremssystems nach Anspruch 1 ergeben sich durch die Merkmale der Unteransprüche.

Der Erfindung liegt der Gedanke zugrunde, mittels Unterdruck den Bremskolben einer Radbremse aktiv zurückzustellen, wobei insbesondere durch die Größe des Unterdrucks und dessen Dauer eine definierte Verstellung des Kolbens und mit ihm der Bremsbelag bzw. die Bremsbeläge zur Einstellung eines definierten Lüftspiels verstellbar sind.

Der Unterdruck kann in einer ersten Ausführungsform der Erfindung mittels des Hauptbremszylinders erfolgen. Sofern der Antrieb des Hauptbremszylinders nicht schnell genug arbeitet, kann gemäß einer zweiten Ausführungsform der Erfindung ein zusätzliches Aggregat zur Unterdruckerzeugung vorgesehen werden, welches mit der Hydraulikzuführleitung der jeweiligen Radbremse in Verbindung ist.

Für beide vorbeschriebenen Ausführungsformen kann vorteilhaft mindestens ein Ventil vorgesehen werden, das bzw. die zwischen dem Vorratsbehältnis für das Hydraulikmedium und dem Hauptbremszylinder und/oder dem Aggregat zur Unterdruckerzeugung und dem Hauptbremszylinder angeordnet ist bzw. sind. Mittels dieses mindestens einen Ventils wird verhindert, dass bei der Unterdruckerzeugung vom Vorratsbehältnis Hydraulikmedium in die Zuführleitung bzw. den Hauptbremszylinder oder das Aggregat einströmt.

Vorteilhaft erhält man durch die Erfindung eine einfache Lösung für hydraulische Bremssysteme, die ein definiertes Lüftspiel ermöglicht und auch diagnosefähig und außerdem adaptiv ist. Vorteilhaft kann die erfindungsgemäße Lösung sowohl bei elektro-pneumatischen als auch bei elektro-hydraulischen Bremssystemen eingesetzt werden.

Das Lüftspiel kann vorteilhaft beim erfindungsgemäßen Bremssystem abhängig vom Fahrzustand des Fahrzeugs adaptiv eingesteuert werden.

Zur Einstellung des erforderlichen Lüftspiels wird gem. der ersten Ausführungsform nach Beendigung der Bremsung durch eine bestimmte Steuerung des Tandem-Hauptbremszylinders (THZ) ein Unterdruck hinter dem Bremskolben einer Radbremse erzeugt, wodurch der Bremskolben entsprechend bewegt und das Lüftspiel erzeugt wird. Zur definierten Verstellung des Bremskolbens der Radbremse kann der Verstellweg und optional der Druck des THZ ausgewertet werden, da bei relativ langsamer Verstellung des THZ der Bremskolbenweg dem Kolben des THZ folgt und aus dem Verhältnis der Kolbenflächen von Brems- und THZ-Kolben das Lüftspiel über den THZ-Weg bestimmt werden kann. Hierdurch kann sichergestellt werden, dass durch ein entsprechendes Lüftspiel von ca. 0,1 mm nur noch eine kleine Restbremswirkung, vornehmlich durch die Reibung in der Führung von Bremsbelag im Schwimmsattel und der Schwimmsattellagerung, vorhanden ist.

Die Hauptkomponente vom Bremskolben jedenfalls entfällt. Bei manchen Bremssattelkonstruktionen ist der Bremsbelag über eine Feder an den Bremskolben gekoppelt, so dass hier nur noch eine geringe Reibung in der Schwimmsattelführung wirkt.

Um bei Bremssystemen mit Schwimmsattel sicherzustellen, dass sich auch ein Lüftspiel bei dem Bremsbelag, welcher auf der dem Bremskolben abgewandten Seite der Bremsscheibe angeordnet ist, einstellt, wird bei einer weiteren Ausgestaltung der Erfindung ein kleines Bremssattellüftspiel erzeugt, so dass keine Restbremswirkung mehr entsteht. Hierzu wird der Schwimmsattel in einer ersten Alternative mittels eines passiven Roll-Back-Elements, ähnlich wirkend wie eine aus dem Stand der Technik bekannte Roll-Back-Dichtung, zur Erzeugung eines Lüftspiels für den am Schwimmsattel befestigten Bremsbelag nach Beendigung des Bremsvorgangs zurückbewegt. Das Roll-Back-Element kann dabei vorteilhaft zwischen Bremshalter und Schwimmsattel-Führungsbolzen wirken. In einer zweiten alternativen Ausführung wird der Schwimmsattel aktiv durch einen Aktuator zur Einstellung des Lüftspiels bewegt. Der Aktuator kann vorteilhaft ein elektromagnetischer Antrieb, wie z.B. ein Magnet oder Verstellmotor, sein.

Es ist selbstverständlich möglich, dass bei allen Radbremsen gleichzeitig, nacheinander oder in Gruppen das Lüftspiel eingestellt wird. Sofern die Erzeugung des Unterdrucks schnell genug erfolgen kann, ist es vorteilhaft, wenn für jede Radbremse einzeln, d.h. nacheinander, das Lüftspiel eingeregelt bzw. eingestellt wird. Dies ist insbesondere möglich bei einem elektro-hydraulischen Bremssystem.

Das Lüftspiel sollte und kann nicht konstant während des Fahrzeugbetriebes andauern. So müssen bei Regen die Bremsbeläge leicht oder sogar vor Beginn der Bremsung nach Rückstellung des Gaspedals verstärkt anliegen. Auch müssen die Bremsbeläge nach längerem Fahren ohne zu bremsen auf trockener Straße zur Scheibenreinigung kurzfristig angelegt werden, was bei dem erfindungsgemäßen Bremssystem auch mit einer definierten kleinen Bremskraft erfolgen kann. Aus diesem Grund muss das Lüftspiel adaptiv einstellbar sein. Auch ist es vorteilhaft, wenn beim Stillstand des Fahrzeugs, z. B. Parken, kein Lüftspiel eingestellt wird.

Sofern ein Lüftspiel eingestellt worden ist, kann dies einen zusätzlichen Verlustweg oder eine längere Ansprechzeit beim Bremsen bedeuten, was abhängig von der Betätigungsgeschwindigkeit der Bremse eine Bremswegverlängerung zur Folge hätte. Bei einer Vollbremsung zum Verhindern eines Auffahrunfalls kann dies entscheidende Meter kosten und zum Unfall führen. Um eine Bremswegverlängerung zu vermeiden, sieht die Erfindung vor, vor Beginn der Bremsbetätigung die Bremsbacken an die Bremsscheibe anzulegen, d.h. das Lüftspiel aufzuheben. Das Bremssystem muss somit erkennen, wann und ob eine Bremsbetätigung erfolgen wird. Hierfür bietet sich an, bei schneller Gaspedalrücknahme die Bremsbacken mit kleiner Bremskraft anzusteuern oder alternativ dies über einen Abstandssensor vom Fuß zum Bremspedal zu steuern. Auch kann das Signal oder die Daten von einem Abstandsmesssystem, welches den Abstand zum vorausfahrenden Fahrzeug oder Hindernis bestimmt, zur Ermittlung eines alsbald einzuleitenden Bremsvorgangs verwendet werden. Ebenso kann die Fahrzeuggeschwindigkeit bei der Auswertung mit berücksichtigt werden.

Bei dem Bremssystem, insbesondere einem elektro-hydraulischen System, muss das zum Anlegen der Bremsbeläge und für die Aufhebung des Lüftspiels vom Hauptbremszylinder, insbesondere THZ, eingespeiste Volumen wieder nachgefördert werden, indem der Hauptbremszylinder nach Anlegen der Bremsbeläge in die Normalstellung zurückfährt und über die Schnüffellöcher des Hauptbremszylinders das Volumen ausgeglichen wird. Dieser Vorgang erfordert nur < 50 ms und ist abgeschlossen bevor der Fuß der das Fahrzeug fahrenden Person das Bremspedal berührt.

Vorteilhaft sind alle Funktionen des erfindungsgemäßen Bremssystems voll diagnosefähig. So kann z. B. durch entsprechende Hauptbremszylinder-Steuerung das Lüftspiel beim Anlegen des Bremskolbens an den Bremsbelag, insbesondere bei Fahrzeugstillstand, getestet werden.

Vorteilhaft kann durch die Erfindung ein Bremsbelagverschleißsensor eingespart werden. Hierzu wird bei Fahrzeugstillstand, vorzugsweise in Parkierstellung, durch o. g. Ansteuerung der Bremskolben auf Anschlag zurückgestellt und anschließend wieder zur Anlage an die Bremsscheibe vorgestellt. Dieser Verstellweg ist proportional zum Belagverschleiß. Der zusätzliche Vorteil ist, dass der Verschleiß bei entsprechenden Diagnoseintervallen extrapoliert werden kann und im Fahrzeugdiagnosesystem erfasst wird. Daher entfällt der Zusatzaufwand bei der Fahrzeuginspektion, z. B. durch Demontage der Räder, um den Belagverschleiß zu sichten.

Die vorgeschlagene Lösung erlaubt vorteilhaft ein definiertes Lüftspiel mit einer, wenn überhaupt, nur sehr kleinen Restbremswirkung und damit eine erhebliche Reduzierung von CO₂. Das erfindungsgemäße Bremssystem ist darüber hinaus voll diagnosefähig und erspart und verbessert die Bremsbelagsverschleißanzeige als wesentliche Sicherheitsfunktion. Die Lösung ist außerdem sehr kostengünstig.

Für eine schnelle Markteinführung eignet sich die oben beschriebene zweite Ausführungsform, da sie eine Add-On-Lösung zu bestehenden ABS/ESP-Konzepten mit Vakuumverstärker darstellt, in der eine elektromotorische Saug-Druck-Einheit mit Umschaltventilen an den bestehenden Tandemhauptbremszylinder mit Vakuum-Bremskraftverstärker anbaubar ist und zusätzlich mit dem ABS-Einlassventil die Lüftspiel-Steuerung mit demselben Verteiler der einzelnen Radbremsen ermöglicht. Bei Markteinführung des elektromotorischen Bremskraftverstärkers gemäß der DE 10 2005 018 649 entfällt bis auf die Umschaltventile dieser Zusatzaufwand.

In der DE1020070628392 sind Nachförderkammern beschrieben, die nach Bedarf zusätzliches Volumen in die Bremskreise einbringen bei Grenzfällen wie Fading und hohem Druck und Volumenbedarf.

Die Nachförderkammer kann noch für eine weitere Funktion genutzt werden, zur Einstellung des Bremsbelagspiels. Bei den vorgenannten Lösungen ist die Ansteuerung von Kolben und Ventilspielen sehr komplex, wenn der Kolben nicht aus der Anfangsstellung zurückgefahren werden kann, da dies bei dem elektromotorischem Bremskraftverstärker konstruktiven Mehrauf-wand bedeutet. Dagegen ist es mit der Nachförderkammer einfach, indem ein entsprechendes Volumen kurzzeitig vom HZ Kolben zurückbewegt wird um den Unterdruck in vorzugsweise einem Radzylinder zu erzeugen. Die restlichen Radzylinder werden hintereinander bedient. Dabei kann bei Messung des Unterdruckes über den Druckgeber und entsprechender Wegsteuerung des Druckstangenkolbens ein Lüftspiel in den Radzylindern erzeugt werden. Dieses Bremslüftspiel kann bei oder auch vor einer Bremsung jederzeit wieder eliminiert werden. So können aufgrund eines externen Signals bereits vor Beginn der Bremsung die Bremsbeläge wieder an die Bremsscheibe anzulegen. Durch diese sogenannte Vorfüllung ist es möglich den Bremsweg zu verkürzen, insbesondere wenn der Vorfülldruck bereits ein Druckniveau von 5 bar erreicht.

Nachfolgend werden anhand von Zeichnungen die zwei möglichen Ausführungsformen der Erfindung sowie Regelkonzepte näher erläutert.

Es zeigen:
- Fig. 1:: Eine erste Ausführungsform der Erfindung;
- Fig. 1a:: eine zweite alternative Ausführungsform der Erfindung mit zusätzlichem Kolben-Zylinder-Aggregat;
- Fig. 2:: Steuervorgang zur Einstellung eines Lüftspiels;
- Fig. 3:: Steuervorgang zur Aufhebung des Lustspiels vor dem Einleiten des Bremsvorgangs;
- Fig. 4:: Steuervorgang zur Ermittlung des Bremsbelagverschleißes;
- Fig. 5:: Steuervorgang bei minimalem und maximalem Bremsbelagverschleiß;
- Fig. 6:: erste Alternative mit Roll-Back-Element für Schwimmsattel;
- Fig. 7:: zweite Alternative mit Aktuator zur Verstellung des Schwimmsattels zur Einstellung eines Lüftspiels für den Bremsbelag, der auf der dem Bremskolben abgewandten Seite der Bremsscheibe angeordnet ist;
- Fig. 8:: dritte alternative Ausführungsform, mit Nachfördereinrichtungen.

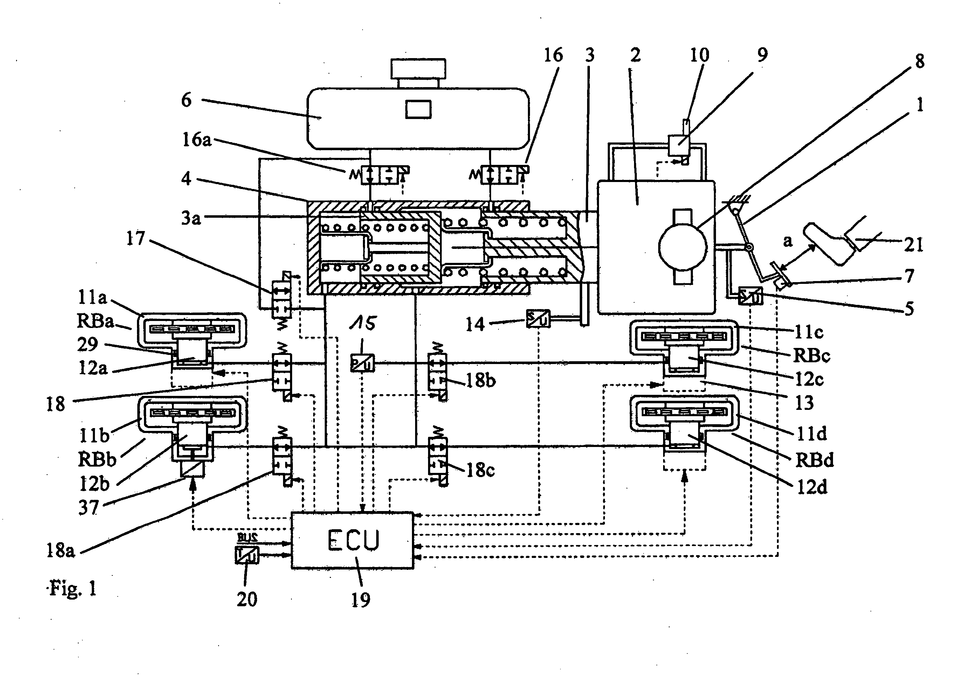

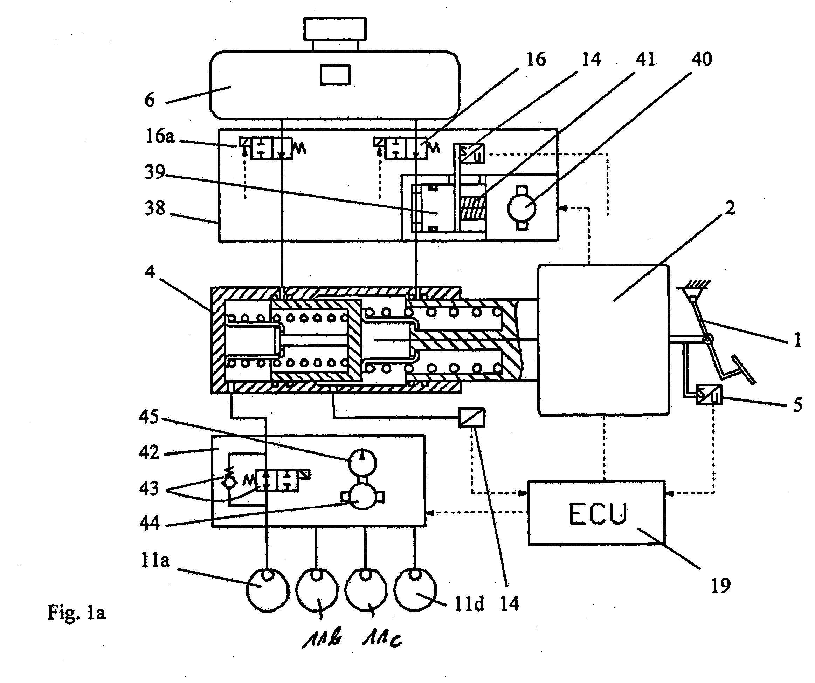

Die Fig. 1 zeigt ein Bremssystem mit Regelventilen 18, 18a, 18b, 18c wie es im Wesentlichen in der DE 10 2005 018 649 beschrieben ist, und auf deren Offenbarungsgehalt im Übrigen Bezug genommen wird. Das Bremssystem umfasst u.a. den elektromotorischen Bremskraftverstärker (BKV) 2, 8 mit Tandem-Hauptbremszylinder (THZ) 4 sowie dessen Druckstangenkolben (DK) 3 und Schwimmkolben (SK) 3a, das Bremspedal 1, den Pedalweggeber 5, die Regelventile 18 bis 18 c, die Umschaltventile 16, 16a und 17, den Druckgeber 15, die Radbremsen RBa bis RBd und den Vorratsbehälter (ECU) 19. Wie in der DE 10 2005 018 649 beschrieben, vereint das Bremssystem die Bremskraftverstärkung mit der Druckmodulation ABS und ESP.

Die vorliegende Erfindung erweitert das Bremssystem der DE 10 2005 018 649 um die aktive Einstellung eines Lüftspiels in den einzelnen Radbremsen.

Wird nach erfolgter Bremsung das Fahrzeug über das nicht gezeichnete Gaspedal oder die Geschwindigkeits-Regelanlage beschleunigt oder mit konstanter Geschwindigkeit gefahren, so werden in der einfachsten Ausgestaltung der Erfindung bzw. deren Steuerung die Umschaltventile 16 und 16a geschlossen, so dass der THZ 4 vom Vorratsbehälter 6 getrennt ist. Anschließend wird der DK-Kolben 3 des THZ 4 mittels des elektromotorischen Antriebs aus der Normalstellung zurück gefahren, was bewirkt, dass sich ein Unterdruck in dem Arbeitsraum und den Hydraulikleitungen einstellt. Soll nun z. B. der Bremskolben 12c der Radbremse RBc durch den Unterdruck bewegt werden, so muss das Regelventil 18b geöffnet und die Regelventile 18, 18a, 18c, welche den übrigen Radbremsen zugeordnet sind, geschlossen werden. Solange sich der DK-Kolben 3 weiter bewegt, wird bei geöffnetem Ventil 18b der Bremskolben 12c der Radbremse RBc zurückgefahren. Aus dem Flächenverhältnis von Bremskolben 12c und DK-Kolben 3 ergibt sich bei einem einzustellenden Lüftspiel von z. B. 0,1 mm die notwendige Verstellbewegung des DK-Kolbens 3, wenn die Bewegung im Verhältnis zur Druckmodulation für ABS langsam erfolgt und keine dynamischen Einflussfaktoren wirken.

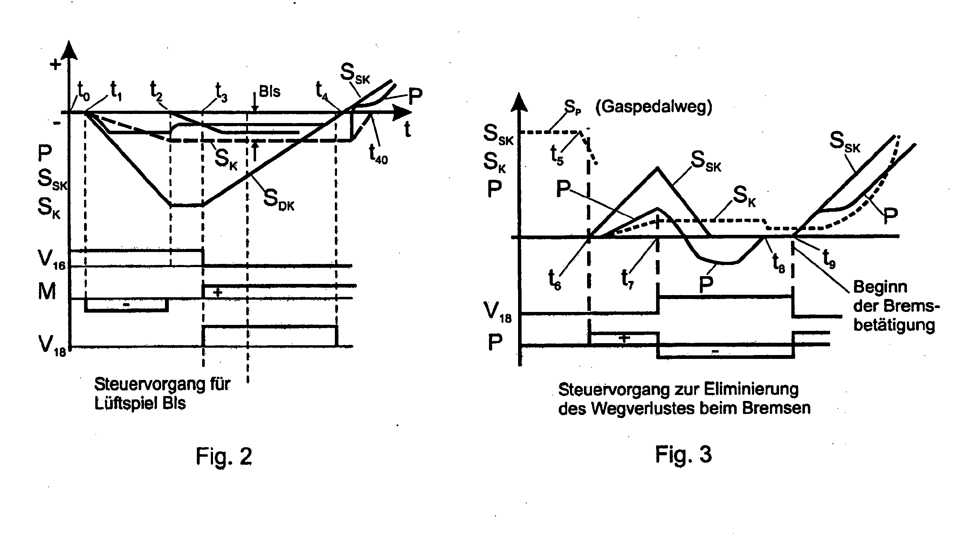

Die Bewegung des DK-Kolbens 3 kann auch anhand des Druckverlaufs mittels des Sensors 15 überwacht werden. Für die Steuerung des Lüftspiels genügt eine Genauigkeit von ± 40 %. Dadurch, dass die Anpresskraft des Bremskolbens entfällt, entspannt sich auch die resultierende Kraft auf den Bremsbelag bzw. dessen Auflagekraft auf den nicht gezeichneten Bremshalter. Bei vielen Bremssattelausführungen ist der Bremsbelag durch Rastfedern mit dem Bremskolben oder auch dem Schwimmsattel verbunden, so dass eine Zurückstellung des Bremskolbens automatisch den Bremsbelag von der Restbremswirkung eliminiert. Auch die Lagerkräfte in den nicht gezeichneten Führungsbolzen des Schwimmsattels werden geringer, so dass letztlich nur noch eine sehr geringe Restbremswirkung übrig bleibt. In den Figuren 2 bis 5 werden die zeitlichen Abläufe der Lüftspiel-Steuerung näher erläutert.

In der gezeichneten Stellung der THZ DK-Kolben 3 und SK-Kolben 4 sind die sog. Schnüffellöcher zum Nachsaugen der Bremsflüssigkeit aus dem Vorratsbehälter 6 geöffnet. Diese Stellung wird als Normalstellung bezeichnet. Ein Zurückfahren des DK-Kolbens 3 aus dieser Normalstellung gegen die normale Betätigungsrichtung bedeutet einigen konstruktiven Aufwand. Alternativ dazu besteht die Möglichkeit, über entsprechende Vorwärtsbewegung des DK-Kolbens 3 zwei Bremskolben eines Bremskreises mit kleinem Druck zu beaufschlagen, anschließend nur einen ersten Bremskolben über Unterdruck zurückzufahren, wobei ein größeres Lüftspiel als notwendig eingestellt wird. Der andere zweite Bremskolben verharrt währenddessen aufgrund des ihm zugeordneten geschlossenen Regelventils in seiner Stellung. Anschließend wird der erste Bremskolben auf ein kleineres Lüftspiel durch entsprechende DK-Kolbenbewegung bewegt und anschließend der zweite Bremskolben wiederum über DK-KolbenRückbewegung auf das entsprechende Lüftspiel gesteuert. Während der Druckbeaufschlagung, d.h. Ventilbewegung, aus der Normalstellung heraus mit kleinem Druck sind z.B. die Regelventile 18b und 18c des Bremskreises, der vom DK-Kolben 3 versorgt wird, offen. Ebenso sind die Umschaltventile 16 und 16a geöffnet. Während der Rückbewegung des DK-Kolbens 3 ist das Umschaltventil 16 und ein Regelventil, z.B. 18c, geschlossen, wobei der Bremskolben 12c auf das doppelte Lüftspiel bewegt wird. Der DK-Kolben 3 verharrt anschließend in der "Normalstellung" bei offenem Umschaltventil 16 und ebenfalls geöffnetem Regelventil 18b. Hierbei bewegt sich der Bremskolben 12d in seine Ausgangsstellung ohne Lüftspiel. Im nächsten Schritt wird bei offenen Ventilen 16 und 18b der Bremskolben 12c auf das normale Lüftspiel durch entsprechende DK-Kolbenbewegung gebracht. Das Regelventil 18c ist hierbei geschlossen. Anschließend werden das Umschaltventil 16 und das Regelventil 18b geschlossen und die DK-Kolbenrückbewegung bei offenem Regelventil 18c aktiviert. Hierbei wird beim zweiten Bremskolben 12d das Lüftspiel eingestellt. Danach fährt der Kolben in die Normalstellung bei geschlossenem Regelventil 18c und offenem Umschaltventil 16. In der Normalstellung sind alle Ventile offen.

Eine weitere Steuermöglichkeit zur Vermeidung der Rückbewegung aus der Normalstellung besteht darin, ähnlich der vorgenannten, den DK-Kolben 3 aus der Normalstellung heraus mit geringer Druckbeaufschlagung beider Bremskolben 12c und 12d bei offenen Ventilen zu bewegen. Anschließend wird der DK-Kolben 3 bei geschlossenem Umschaltventil 16 und offenem Regelventil 18b zurückbewegt, bis im Kolben 12c das Lüftspiel erreicht ist. Anschließend wird das Regelventil 18b geschlossen und Regelventil 18c geöffnet und der DK-Kolben 3 weiterbewegt, bis beim Bremskolben 12d ebenfalls das Lüftspiel erreicht ist. Danach wird das Regelventil 18c ebenfalls geschlossen, und der DK-Kolben 3 fährt bei offenem Umschaltventil 16 in die Normalstellung zurück. Nach Erreichen der Normalstellung werden alle noch nicht geöffneten Ventile wieder geöffnet. Es hat sich herausgestellt, dass diese Steuerung am einfachsten zu realisieren ist.

Für die Lüftspiel-Steuerung der Bremskolben gibt es verschiedene Steuermöglichkeiten. Eine weitere besteht darin, ein Umschaltventil 17 im Primärkreis in der Verbindung von THZ 4 zu den Radbremsen anzuordnen. Zur Lüftspiel-Steuerung wird im entsprechenden Bremskreis in beiden Radbremsen ein kleiner Druck erzeugt. Ein Zurückfahren von DK-Kolben 3 und SK-Kolben 3a bewirkt bei offenem Regelventil 18 und geschlossenen Regelventilen z. B. 18a, 18b u. 18c, im Bremskolben 12a der Bremse RBa einen Unterdruck. Dieser ist feststellbar über Druckgeber 15. Eine entsprechende Kolbenbewegung von DK-Kolben 3, die mittels des Sensors 14 ermittelt werden kann, ergibt ähnlich den vorgenannten Beispielen das erwünschte Lüftspiel in der Radbremse RBa. Der Hubsensor 14 kann durch den üblichen und nicht gezeichneten Drehwinkelsensor des EC-Motors des BKV 8 ersetzt werden. Mit erheblichem Mehraufwand kann das Lüftspiel am Bremskolben direkt durch einen an der Radbremse angeordneten Sensor 37 gemessen bzw. geregelt werden.

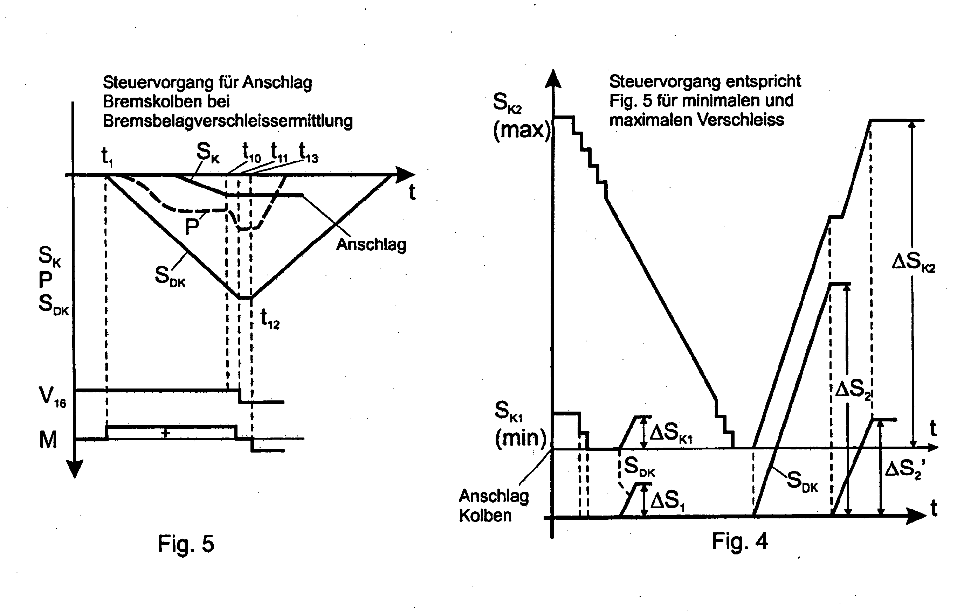

Das Erzeugen eines definierten Lüftspiels an allen vier Radbremsen bedeutet bei Bremsbetätigung ein Zusatzvolumen, d. h. einen zusätzlichen Pedalweg, was wiederum die zeitliche Ansprechcharakteristik verschlechtert und bei einer Vollbremsung einen verlängerten Bremsweg bedeutet. Dieser Volumenausgleich kann durch entsprechende Steuerung mittels eines schnellen Bremskraftverstärkers BKV 2 mit THZ 4 vor der Bremsbetätigung erfolgen. Dieser Vorgang wird anhand von Fig. 4 beschrieben. Der Start für diese Volumenausgleichsteuerung kann bei schneller Rückstellung des Gaspedals erfolgen. Diese Lösung funktioniert allerdings nicht bei Fahrzeugen mit Geschwindigkeits-Regelanlage, bei denen der Fuß nicht auf dem Gaspedal stehen muss. Hier kann z.B. ein einfacher Abstandssensor 7 am Bremspedal 1 vorgesehen werden, welcher bei Annäherung des Fußes an das Bremspedal den Ansprechabstand a misst. Bei Unterschreiten eines bestimmten Abstandes kann dann z.B. der Start für den Volumenausgleich eingeleitet werden.

Das Lüftspiel sollte insbesondere bei Regen nicht wirken. Regen oder eine nasse Fahrbahn kann dem Bremssystem z.B. durch das Ansteuersignal des Scheibenwischers, welches dem ECU 19 über den Bus zugeführt wird, signalisiert werden. Gleichsam ist es möglich, z.B. das Signal eines Regensensors zu verwenden. Hier kann zusätzlich zu den vorgenannten Kriterien kurz von der Bremsung mit erhöhtem Druck von < 5 bar die Bremsscheibe frei gebremst werden. Bei längerer Fahrt bei trockener Straße ohne Bremsbetätigung kann über kurze Zeit durch Anlegen der Bremsbeläge die Scheibe gereinigt werden.

Auch in Parkstellung oder bei kleinen Geschwindigkeiten kann das Lüftspiel ausgeschaltet werden. Dasselbe kann für tiefe Temperaturen gelten, welche von der ECU 19 mittels eines Temperaturfühlers im Motorraum oder den vorhandenen Außentemperaturfühlern zugeführt werden.

Als Alternative zum bevorzugten elektro-motorischen Bremskraftverstärker kann auch ein Vakuum- oder hydraulischer Bremskraftverstärker eingesetzt werden, wodurch zusätzliche Umschaltventile 9 und die Druckversorgungsleitung 10 erforderlich sind. Nach heutigem Stand der Technik ist jedoch die Dynamik von diesen Verstärkern nicht ausreichend, um eine hinreichend schnelle Steuerung von Lüftspiel und Volumenausgleich durchzuführen. Für diese Bremskraftverstärker wird in Fig. 1a eine Add-On-Lösung vorgeschlagen. Diese besteht aus den bereits beschriebenen Umschaltventilen 16 und 16a und einer Saug-Druck-Steuerung 38, bestehend aus Kolben 49, Spindel 41 mit elektro-motorischem Antrieb 40, sowie Wegsensor 14. Anstelle dieses Wegsensors 14 kann bei Verwendung eines E-Motors auch dessen integrierter Drehwinkelgeber verwendet werden. Als Alternative zum E-Motor kann auch ein Linearmagnet verwendet werden, da die erforderliche Leistung zur Erzielung des benötigten Unterdrucks nicht sehr hoch ist. Soll nun das Lüftspiel, z. B. in der Radbremse 11a, eingestellt werden, so werden alle nicht gezeichneten E-Ventile mit E-Motor 44 und Pumpe 45 der ABS/ESP HCU (Hydr. Computing unit) 42 geschlossen. Ebenso werden die Umschaltventile 16 und 16a geschlossen. Der Kolben 39 fährt einen bestimmten Weg, wie bereits beim Tandem-Hauptbremszylinder beschrieben, zurück, wobei das E-Ventil 43 offen ist. Auch hier kann der Vorgang über den Druckgeber 14 überwacht werden. Nachdem das Lüftspiel eingesteuert ist, schließt das E-Ventil 43. Der Kolben 39 fährt weiter zurück und steuert nacheinander in den übrigen Radbremsen 11b bis 11d das erforderliche Lüftspiel ein. Danach bleibt der Kolben 39 stehen, die Umschaltventileund alle E-Ventile werden geöffnet. Soll nun das Lüftspiel ausgeschaltet werden oder wird der Bremsvorgang eingeleitet, so erfolgt eine schnelle Verstellung des Kolbens 39 in die Ausgangsstellung. Hierbei sind die Umschaltventile 16 und 16a geschlossen. Dadurch erfolgt vor der Bremsung der Volumenausgleich, und es entsteht kein Nachteil in der Ansprechcharakteristik der Bremse. Das Druckniveau ist im Bereich < 2 bar, somit sind die Verstellleistung und der konstruktive Aufwand sowie das Gewicht gering. Der Druckgeber 15 ist in jedem ESP-System vorhanden und muss ggf. im Messbereich für den Unterdruck erweitert werden.

Die Fig. 2 zeigt den zeitlichen Steuervorgang für das Einstellen eines Lüftspiels entsprechend der einfachen Steuerung. Im Diagramm sind die Wege der Kolben und der Druck hinter dem Bremskolben dargestellt. Mit Sₖ ist der Weg-Zeit-Verlauf des jeweiligen Bremskolbens, mit S_{DK} der Weg-Zeitverlauf des DK-Kolbens 3, mit p der Druck hinter dem Bremskolben sowie mit BLS die Größe des Lüftspiels gekennzeichnet. Mit V16 und V18 sind die Stellungen der Ventile 16 und 18 gekennzeichnet. Die Kurve M zeigt die Bewegungsrichtung der Verstellung des DK-Kolbens 3 an. Zum Zeitpunkt t₀ erfolgt die Ansteuerung des Umschaltventils 16/16a und bei t₁ die Ansteuerung des Motors zur Rückverstellung des DK-Kolbens 3 aus der Normalstellung, bei der die Schnüffellöcher offen sind. Beide Schaltpunkte t₀ und t₁ können auch zusammengelegt werden. Mit Zurückfahren des DK-Kolbens 3 steigt der Unterdruck p an, was nach Überschreiten eines bestimmten Wertes zur Bewegung des Bremskolbens S_{K} führt. Während der Bewegung von DK-Kolben 3 und Bremskolben S_{K} bleibt der Druck annähernd konstant und weit unter dem Grenzwert -1 bar als Indiz, dass sich der Kolben bewegt. Voller bzw. maximaler Unterdruck würde ein Indiz dafür sein, dass sich der Kolben nicht bewegt bzw. klemmt. Zum Zeitpunkt t₂ ist der Sollwert von BLS über die beschriebene Korrelation von Kolbenfläche und entsprechendem Weg von S_{K} und S_{DK} erreicht. Nach Ende der S_{K}-Bewegung nimmt der Unterdruck ab. Bis zu t₃ erfolgt keine weitere Bewegung. Danach wird der DK-Kolben 3 in die Normalstellung bewegt, die zum Zeitpunkt t₄ erreicht wird. Während der DK-Kolbenbewegung bleibt das Regelventil 18 geschlossen, und die Umschaltventile 16 und 16a werden zum Druckausgleich geöffnet.

Bei t₄ wird das Regelventil 18 geöffnet, so dass beidseitig des Bremskolbens Atmosphärendruck herrscht. Nach t₄ kann durch Druckerhöhung das Lüftspiel ausgeschaltet werden. Bei weiterer Bewegung des DK-Kolbens 3 aus der Normalstellung kann aus dem Druckverlauf und S_{DK}-Weg das Lüftspiel zum Wiederanlegen ermittelt werden, so dass hiermit eine Diagnose des Lüftspiels erfolgt. Entscheidend ist, dass die Zeitdauer des Unterdrucks und dessen Höhe gering sind, um ein Ausgasen von eingeschlossener Luft in der Bremsflüssigkeit zu vermeiden. Daher muss zum Zeitpunkt t₄, wenn keine Druckerhöhung erfolgt, der DK-Kolben 3 in Normalstellung und die Umschaltventile geöffnet sein, damit voller Druckausgleich auf die Bremskolben wirkt und diese in der Lüftspiel-Stellung verharren. Die Reibkräfte der Roll-Back-Dichtung sind relativ hoch. Bei dieser definierten Lüftspiel-Steuerung können auch andere Dichtungen eingesetzt werden, was dem Anbremsverhalten bei kleinen Bremsverzögerungen zu Gute kommt.

Die Fig. 3 beschreibt den Vorgang der Volumenausgleichsteuerung. Zum Zeitpunkt t₅ erfolgt die schnelle Rücknahme des Gaspedals, was zum Zeitpunkt t₆ zur Motoransteuerung und Bewegung des DK-Kolbens 3 führt und die Bremsbeläge nach entsprechendem Sₖ-Weg wieder anlegt. Zum Zeitpunkt t₇ ist dies erfolgt, was zu einer Umpolung des Motors und zum Öffnen der Umschaltventile 16 und 16a führt. In dieser Rückbewegung werden die Regelventile 18-18c geschlossen und über Manschetten des HZ-Kolbens wird durch den Unterdruck das entsprechend fehlende Volumen in die HZ-Kammern angesaugt. Zum Zeitpunkt t₈ herrscht wieder Druckausgleich. Zum Zeitpunkt t₉ kann dann die Bremse normal betätigt werden, ohne das ein Volumen- bzw. Pedalwegverlust zum Druckaufbau vorhanden ist. Auch hier ist entscheidend, dass dieser Vorgang sehr schnell, z. B. < 50 ms, erledigt wird.

Die Fig. 4 zeigt die Steuerung zur Ermittlung des Bremsbelagverschleißes. Es ist auf der Ordinate der Kolbenweg S_{K} für S_{K1}(min) und S_{K2} (max) Verschleiß dargestellt. Der treppenförmige Verlauf stellt die Unterdruckintervalle zur Zurückbewegung des Kolbens in die Ausgangsstellung bzw. zum Anschlag dar. Dieser Steuervorgang für den Bremskolbenanschlag wird anhand von Fig. 5 näher beschrieben. Nachdem der Bremskolben auf Anschlag liegt, erfolgt wieder die Bewegung in Richtung Anlage an die Bremsscheibe. Bei minimalem Verschleiß ist dies nach ΔS_{K1} bzw. ΔS₁ des Steuerkolbens erfolgt. Bei großem Verschleiß genügt ein HZ-Vollhub nicht, so dass in mehreren Stufen Δ S2+ Δ S2' die gesamte Kolbenbewegung, welche proportional zum Verschleiß ist, ermittelt werden kann. Dieser Test kann in größeren Abständen, z. B. alle 10.000 km, erfolgen. Der Vorteil ist eine Extrapolation der Verschleißwerte, so dass die aufwändige Überprüfung im Service entfallen kann.

Die Fig. 5 zeigt den Steuervorgang kurz vor Anschlag des Bremskolbens. Der erste Teil nach t₁ entspricht dem in Fig. 3 bereits beschriebenen. Zum Zeitpunkt t₁₀ erfolgt ein Anstieg des Unterdrucks, sobald der Kolben auf Anschlag läuft, was als Ausgangsbasis für die Messung des Bremsbelagverschleißes genutzt wird. Bei t₁₁ wird der Motor abgeschaltet und das Umschaltventil 16, 16a geschlossen. Bei t₁₂ erfolgt eine Rückbewegung des DK-Kolbens in die Ausgangsstellung.

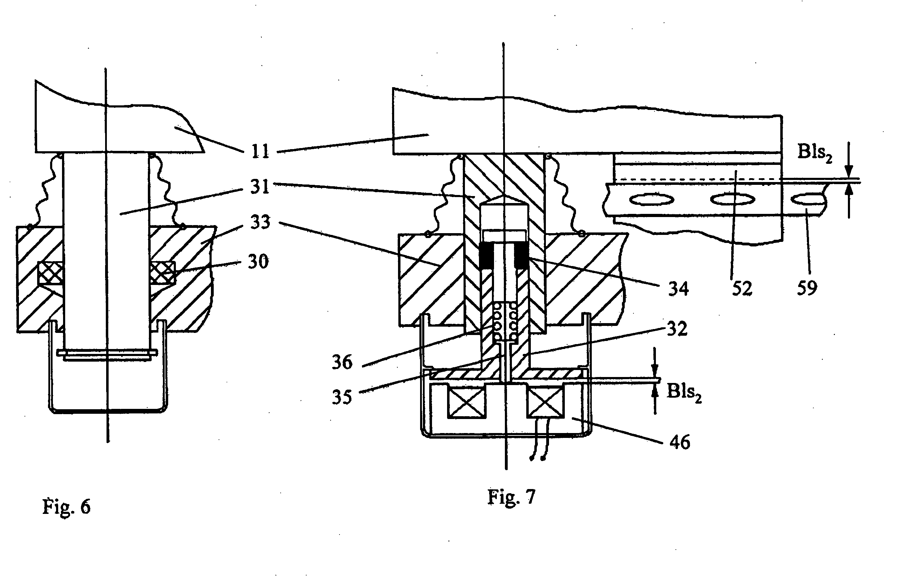

Die Fig. 6 zeigt einen Ausschnitt aus der Schwimmsattellagerung mit Bremshalter 33, Bremssattel 11a und Führungsbolzen 31. Hier wird vorgeschlagen, für ein Lüftspiel des Sattels ein Roll-Back-Element 30 einzusetzen, welches nach Ende der Druckbeaufschlagung neben dem Lüftspiel beim Bremskolben auch auf der Sattelseite ein Lüftspiel erzeugt. Damit ist das Restbremsmoment nahezu Null, da der Bremskolben den Bremsbelag mit einer Spreizfeder ankoppelt und damit einen Abstand zur Bremsscheibe schafft.

Die Lösung gem. der Fig. 7 hat ebenfalls die Aufgabe, ein Lüftspiel auf der Sattelseite zu erzeugen. Hier ist im Führungsbolzen 31 ein Magnetanker mit Lagerzapfen 32 mit einem Spreizelement 34 versehen, dessen Reibung größer ist als die Reibung der beiden Führungszapfen des Sattels. Bei Beginn der Bremsung wird der Magnet mit einer Spule bestromt und zieht den Anker mit Bremssattel 11 an. Auf der Gegenseite wird durch die Reaktionskraft des Bremskolbens der Bremssattel 11 über den Bremsbelag 52 auf die Bremsscheibe gedrückt und erzeugt somit bekanntlich die Bremswirkung. Nach Ende der Bremsung wird der Magnet 46 abgeschaltet, und der Rückstellbolzen 35 mit Druckfeder 36 erzeugt ein definiertes Lüftspiel BLS₂ und damit die Rückstellung des Sattels. Dadurch, dass bei Bremsbeginn ähnlich Fig. 1 über einen Abstandsgeber zum Bremspedal der Magnet aktiviert wird, hat dieses Lüftspiel BLS₂ keine Pedalwegverlängerung zur Folge.

Vorstehend sind viele realisierbare Lösungen beschrieben, welche eine adaptive Steuerung des Lüftspiels mit dem Ziel ermöglichen, die Bremswirkung sehr gering zu halten, wodurch sich eine hohe Reduktion von CO₂ und Kraftstoffverbrauch ergibt. Gemäß dem Erfindungsgedanken kann nicht nur bremskolbenseitig, sondern auch auf der Sattelseite ein Lüftspiel mit den erfindungsgemäßen Lösungen gezielt eingestellt werden, so dass die Restbremswirkung nahezu Null wird.

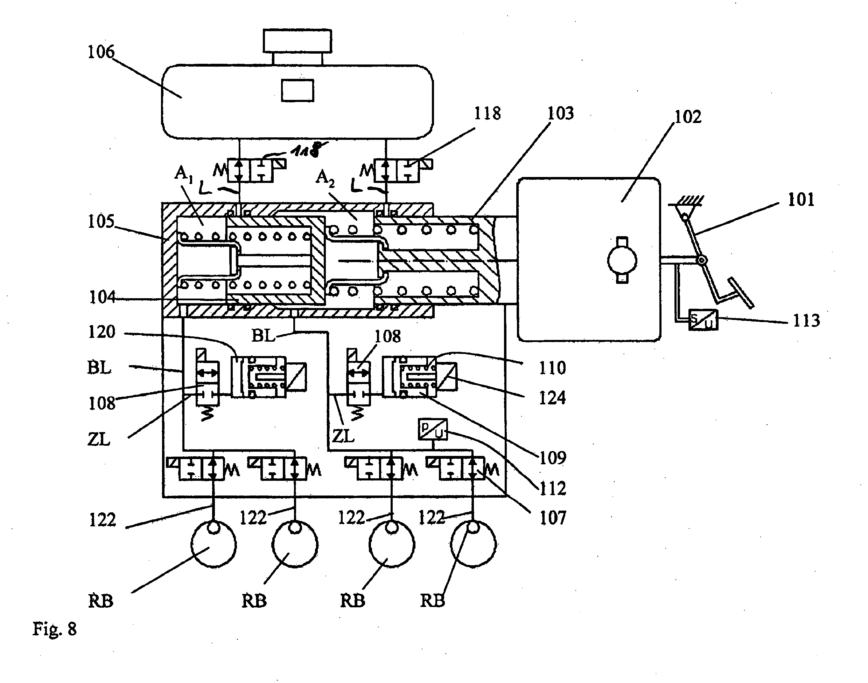

Die Figur 8 zeigt den prinzipiellen Aufbau eines el. mot. BKV wie er in der DE 102005018649.19, DE 102006059840.7 und DE 102005003648 beschrieben ist, wobei sich diese Anmeldung deren Offenbarungsgehalt vollumfänglich zu eigen macht. Bei intaktem BKV ist das Pedal vom Hauptbremszylinder Hz entkoppelt. Die Pedalkraft wird vom nicht dargestellten Wegsimulator aufgenommen, welcher ein gewohntes Pedalgefühl generiert. Der Pedalhubsensor 113 erfasst den Pedalhub welcher über einer Kennlinie einem gewünschten Bremsdruck zugeordnet werden kann. Somit wird durch Betätigung des Bremspedals 101 der Bremskraftverstärker 102 aktiviert, welcher auf den Druckstangenkolben 103 des Hauptbremszylinders 105 wirkt. Durch die Volumenverdrängung und den Druck wird der Schwimmkolben 104 bewegt. Beide Kolben 103 und 104 bewirken die Druckerzeugung in den jeweiligen Bremskreisen. Die entsprechende Bremsflüssigkeit wird im Vorratsbehälter bereitgestellt. Zu Details des Aufbaus des bekannten Hauptbremszylinders wird auf die DE 102005018649.19, DE 102006059840.7 und DE 102005003648 verwiesen. Bekanntlich können der Pedalweg und der Kolbenweg bei Wegsimulatorsystemen unterschiedlich sein. Der Kolben eilt bei Bremsungen auf hohem Reibwert dem Pedal voraus. Kommt nun der Kolben 103, 104 in den Bereich des Hubendes findet der Nachförderprozess statt. Dabei werden zunächst die Regelventile 107 geschlossen und der erreichte Druck wird in den Radbremsen eingesperrt. Anschließend werden die Nachförderventile 108 geöffnet. Gleichzeitig wird der Druckstangenkolben 103 durch den elektromotorischen BKV zurückgefahren wodurch der Druck im Hauptbremszylinder gegen Null (0) sinkt. Aus den bereits befüllten Nachförderkammern 120 der Nachfördereinrichtungen F wird die gespeicherte Bremsflüssigkeit mittels der Feder 110 und des Kolbens 109 in die Arbeitsräume A1, A2 des Hauptbremszylinders gefördert. In der Nachförderkammer 120 herrscht vorzugsweise Überdruck, z.B. 5 bar, sodass die Bremsflüssigkeit aktiv in den Hauptbremszylinder gefördert wird. Anschließend werden die Nachfördeventile 108 geschlossen und die Regelventile 107 geöffnet. Durch eine entsprechende Motoransteuerung wird die Bremsflüssigkeit nun in die Bremskreise 122 verdrängt wodurch der Druck in den jeweiligen Bremskreisen 122, je nach Stellung der Ventile 107, weiter ansteigt. Somit ist ein weiterer Druckanstieg möglich ohne dass die Kolben 103 und 104 in den Endbereich (linke Stellung) gelangen. Wahlweise kann auch nur in einem Bremskreis 122 nachgefördert werden. Durch entsprechende Auslegung von Kolbenfläche und Kolbenhub kann in der Nachförderkammer 120 das fehlende Volumen im Hz zur Abdeckung sämtlicher Extremfälle vorgehalten werden. Durch die Vorspannung der Feder 110 beträgt der Fülldruck z.B. 5 bis 10 bar bei entsprechender Federauslegung. Gemeinsam mit einem Nachförderventil 108 mit großem Öffnungsquerschnitt wird somit ein schnelles Nachfördern in die Arbeitsräume A₁, A₂, in z.B. 50 ms ermöglicht, wodurch eine nennenswerte Verzögerung des Druckanstiegs vermieden wird.

Die Nachförderventile 108 sollten Durchfluss- und Schaltzeit optimiert sein. Die Ventile 108, welche vorzugsweise stromlos geschlossen ausgeführt werden, können einen großen Ventilsitzquerschnitt aufweisen. Durch den Einsatz einer gewöhnlichen Spule kann das Ventil 108 somit nur bei mittleren Drücken, wie z.B. 50 bar, öffnen. Dies ist für das Nachfördern kein Nachteil, da das Schalten der Nachförderventile bei ca. 10 bar stattfindet. Somit sind für das Nachförden keine teuren druckausgeglichenen Ventile notwendig. Aus Zeitgründen kann es auch sinnvoll sein, dass beim Nachfördern nicht das gesamte Volumen im Nachförderkammer 120 bzw. Arbeitsraum in einem Zug nachgefördert wird. Nähert sich z.B. bei 140 bar der Kolben 103, 104 der Endstellung, kann zunächst Volumen für einen Druckaufbau auf 170 bar nachgefördert werden. Soll der Druck weiterhin steigen kann bei 170 bar in einem neuen Nachförderschritt das restliche Volumen für z.B. 200 bar Maximaldruck nachgefördert werden. Da für den Großteil der Fälle der erste Nachfördeschritt ausreicht kann somit für diese Bremsungen die Totzeit im Druckaufbau während des Nachförderns reduziert werden.

Die Nachförderkammer 120 kann nach Befüllung am Bandende bzw. beim Service, bei jedem Fahrzeugstart oder auch in Beschleunigungsphasen befüllt und diagnostiziert werden. Dazu wird über den Motorantrieb vorzugsweise der Maximaldruck in der Nachförderkammer z.B. 10 bar druckgeregelt eingesteuert. Wird nun das Nachfördeventil 108 geöffnet darf sich der Druckstangenkolben 103 nicht bewegen. Falls dies doch der Fall ist deutet dies auf ein Leck in der Kolbendichtung oder ein undichtes Nachförderventil 108 hin. Über den Kolbenweg sK kann das Differenzvolumen festgestellt werden. Durch das Differenzvolumen und die Diagnoseintervalle kann festgestellt werden, in welchem Ausmaß die Leckage stattfindet. Dazu wird im Hauptbremszylinder der maximale Nachförderdruck eingeregelt. Zudem kann nun diagnostiziert werden, ob das Nachförderventil 108 bzw. der Kolben 109 klemmen. Sobald der Nachförderblock 20 wieder aufgefüllt ist, wird der Kolben 103 zurückgefahren. Am Verlauf der DruckVolumen-Kennlinie kann nun festgestellt werden, ob sich der Nachförderkolben 109 mit bewegt und ob das Nachförderventil 108 geschaltet hat.

Alternativ kann der Füllzustand der Nachförderkammer 20 geprüft werden, indem die Regelventile 107 geschlossen werden, im Hz der maximale Fülldruck der Nachförderkammer 20 z.B. 10 bar eingestellt wird, die Kolbenstellung als Stellgröße eingeregelt wird, die Nachförderventile 108 geöffnet werden und durch den Drucksensor 112 überwacht wird, ob der Druck im Hz abfällt.

Durch die Anpassung des Nachfördervolumens ist es somit möglich das selbe Grundsystem für mehrere Fahrzeugklassen zu verwenden. Bei konventionellen Lösungen bestehend aus Hz und Vakuum BKV muss für jede Fahrzeugklasse eine individuelle Dimensionierung verwendet werden, was Mehrkosten für die Logistik bei Produktion und Reparatur bedeutet.

Außerdem entstehen bei Ausfall der Bremskraftverstärkung durch die kleineren Kolbendurchmesser erheblich kleinere Pedalkräfte.

Da bei dem Wegsimulatorsystem der Entlüftungszustand der Bremsanlage über die Druck-Volumen-Kennlinie regelmäßig überprüft werden kann,. kann das Gesamtvolumen der Bremsenbetätigung, bestehend aus Hauptbremszylindervolumen und Nachförderblockverdrängungsvolumen, insgesamt im Vergleich zu konventionellen Systemen reduziert werden. Das zusätzliche Sicherheitsvolumen für schlecht entlüftete Volumen muss nicht mehr vorgesehen werden, wie es bei konventionellen Systemen der Fall ist.

Eine weitere Möglichkeit zur Überwachung des Füllzustandes der Nachförderkammer 20 ist der Einsatz eines optionalen Sensors 24. Dieser Sensor erfasst die Position des Kolbens 9. Der Sensor 24 kann als wegauflösender Sensor oder als Schalter ausgeführt werden, welcher eine Position des Kolbens 9 erfasst. Dieser Sensor kann zur Diagnose genutzt werden oder zur definierten Kolbensteuerung damit für die Funktion der Unterdruckerzeugung ausreichend Volumen bereitgestellt werden kann.

Zum Einstellen eines Belaglüftspiels zwischen Bremsscheibe und Bremsbelag wird im THZ 103,104,105 kurzzeitig ein Unterdruck erzeugt. Somit werden die Bremskolben in den Radbremsen aktiv zurückgezogen wodurch sich ein Abstand zwischen dem Bremsbelag und der Bremsscheibe einstellt. Dies hat zur Folge, dass die Restreibwirkung zwischen Bremsbelägen und Bremsscheibe eliminiert werden kann. Die Nachförderkammer 120 kann zur Erzeugung des Unterdrucks genutzt werden.

Die Nachförderkammern 120 sind im Normalbetrieb nicht komplett befüllt. Sie enthalten ausreichen viel Volumen um Bremsflüssigkeit für hohe Druckanforderungen bereitzustellen können aber noch zusätzliches Volumen aufnehmen.

Zu Beginn der Belaglüftspieleinstellung wird der Kolben 103 über den Motorantrieb 102 vorgefahren. Der Kolben 104 bewegt sich analog dazu. Bei geöffneten Nachförderventilen 108 wird somit die Bremsflüssigkeit in die nur teilweise befüllten Nachförderkammern 120 verdrängt. Anschließend werden die Nachförderventile 108 geschlossen. Nun werden die Magnetventile 118 geschlossen und eines der Regelventile 107 geöffnet. Der Kolben 103 welcher sich immer noch in der ausgefahrenen Stellung befindet wird vom Motorspindeltrieb ein Stück Richtung Ausgangsstellung zurückgezogen. Dadurch entsteht Unterdruck welcher sich über die Bremsleitungen 122 auf die Radbremsen RB überträgt dessen Regelventil 107 geöffnet ist. Nun werden die restlichen drei Radbremsen durch sequentielles öffnen der jeweiligen Regelventile zurückgezogen. Der Verfahrweg des Kolbens 103 ist über das Flächenverhältnis mit dem Bremskolben proportional zum dessen Verfahrweg des Bremskolbens. In dieser Phase wird der Unterdruck ausgewertet, sodass erst unter einem Druckniveau oder zeitlichem Druckverlauf die Kolbenbewegung bewertet wird. Unter zeitlichem Druckverlauf ist gemeint, dass wenn der Unterdruck über die Kolbenreibung konstant ist, dies gleichbedeutend einer Bewegung des Bremskolbens entspricht. Abschließend werden die Magnetventile 118 wieder geöffnet. Somit wird der Unterdruck im THZ 105 aufgehoben. Die Aufgabe der Magnetventile 118 ist es, zu verhindern, dass während der Unterdruckphase im THZ keine Bremsflüssigkeit aus dem Behälter über die THZ Dichtungen in die Arbeitsräume A₁ und A₂ des THZ gelangt. Es ist auch möglich alle Bremskolben der Radbremsen RB gleichzeitig zurückzuziehen, indem in der Unterdruckphase alle Regelventile 107 geöffnet werden.

Wie eingangs erwähnt sind die Nachförderkammern 120 im Normalbetrieb nicht komplett befüllt, damit diese Volumen von Bremsflüssigkeit zur Belaglüftspieleinstellung aufnehmen können. Über den Sensor 124 kann der Befüllzustand überwacht werden. Alternativ ist es auch möglich die Nachförderkammern zunächst komplett zu befüllen und bei zurückgefahrenem Kolben 103, geschlossenen Regelventilen 107 und geöffneten Magnetventilen 118 die Nachförderventile 108 kurzzeitig zu öffnen um ein definiertes Volumen aus der Nachförderkammer entweichen zu lassen. Eine weitere Möglichkeit ist es die Nachförderkammern komplett zu entleeren und über den Kolbenhub 103 ein definiertes Volumen einzubringen. Dabei ist es von Vorteil wenn die beiden Nachförderkammern 120 getrennt voneinander befüllt werden, sodass eine Kammer immer voll ist und das Volumen für hohe Druckanforderungen bereitsteht.

Durch das eingestellte Belaglüftspiel besteht ein erhöhter Abstand zwischen dem Bremsbelag und der Bremsscheibe. Dieser würde bei einer Bremsung stören, da dies eine zusätzliche Volumenaufnahme und somit einen Verlustweg vom Kolben 103 verursacht. Somit ist es wichtig vor einer möglichen Bremsung die Bremsbeläge wieder an die Bremsscheibe anzulegen. Man spricht hierbei von einer Vorfüllung.

Dazu kann die Bremsflüssigkeit aus den Nachförderkammern 120 genutzt werden. Zunächst werden die Magnetventile 118 geschlossen, die Regelventile 107 geöffnet und anschließend die Nachförderventile 108 geöffnet. Die Federn 110 verdrängen über die Kolben 109 somit die Bremsflüssigkeit aus den Nachförderkammern 120 in die Radbremsen RB. Über die Position des Kolbens 109, welche der Sensor 124 liefert, kann das erforderliche Volumen geregelt werden. Alternativ kann das Vorfüllvolumen aus der Öffnungszeit der Nachförderventile und den Befülldruck der Nachförderkammer 120 eingestellt werden. Über den Drucksensor 112 kann auch erfasst werden wenn das Belaglüftspiel aufgehoben ist. Sobald die Bremsbeläge an der Bremsscheibe anliegen steigt der Druck im Bremskreis. Noch effektiver hinsichtlich Bremswegverkürzung ist eine Vorfüllung auf ca. 5 bar, was über einen externen Sensor erfordert.

Ein Verfahren, welches anwendbar ist wenn bei eingestelltem Belaglüftspiel sich die Nachförderkammern 120 z.B. aufgrund einer Leckage entleert haben, sieht folgende Arbeitsschritte vor: Die Nachförderventile 108 bleiben zunächst geschlossen, die Regelventile 107 geöffnet. Der Kolben 103 wird vom Motorantrieb betätigt, sodass Volumen in die Bremskreise gefördert wird bis die Bremsbeläge anliegen. Anschließend werden die Regelventile 107 geschlossen und der Kolben 103 wird wieder zurückgefahren. Somit entsteht Unterdruck in den Arbeitsräumen A1 und A2. Sobald der Kolben 103 seine Ausgangsstellung erreicht wird aufgrund des Unterdruckes das entsprechende Differenzvolumen aus dem Vorratsbehälter gesaugt.

### Bezugszeichenliste

- 1: Bremspedal
- 2: BKV
- 3: DK-Kolben
- 3a: SK-Kolben
- 4: THZ, Tandem-Hauptbremszylinder
- 5: Pedalweggeber
- 6: Vorratsbehälter
- 7: Abstandssensor
- 8: Elektro-motorischer Antriebs des Bremskraftverstärkers (BKV)
- 9: Umschaltventil
- 10: Druckversorgungsleitung
- 11a-d: Bremssattel
- 12a-d: Bremskolben
- 14: DK-Wegsensor
- 15: Druckgeber im DK-Kreis
- 16: Umschaltventil
- 16a: Umschaltventil
- 17: Umschaltventil
- 18: Regelventil
- 18a: Regelventil
- 18b: Regelventil
- 18c: Regelventil
- 19: Vorratsbehälter ECU
- 20: Temperaturgeber an HCU
- 21: Fuß
- 29: Bremskolbendichtung
- 30: Roll-back-Element
- 31: Führungsbolzen
- 32: Magnetanker mit Lagerbolzen
- 33: Bremshalter
- 34: Spreizelement
- 35: Rückstellbolzen
- 36: Rückstellfeder
- 37: Bremskolbensensor
- 38: Sauger-Druck-Steuereinheit
- 39: Hilfskolben
- 40: E-Motor
- 41: Spindel
- 42: HCU (ABS, ESP)
- 43: E-Ventil mit Rückschlagventil von ABS/ESP
- 44: HCU Motor
- 45: HCU Pumpe
- 46: Magnetkreis mit Spule
- 52: Sattelseitiger Bremsbelag
- 59: Bremsscheibe
- BLS: Lüftspiel
- RBₐ-RB_{d}: Radbremsen
- 101: Bremspedal
- 102: Motorantrieb mit ,Wegsimulator
- 103: Druckstangenkolben DK
- 104: Schwimmkolben
- 105: Hauptbremszylinder Hz
- 106: Vorratsbehälter
- 107: Regelventile
- 108: Nachförderventil
- 109: Kolben
- 110: Feder
- 111: Pedalwegsensor
- 112: Drucksensor
- 118: Magnetventil
- 120: Nachförderkammer
- 121: Zulauföffnungen
- 122: Bremskreis
- 124: 124 Sensor
- A₁, A₂: Arbeitsräume des HZ
- BL: Bremsleitung
- ZL: Zuführleitung

## Patentansprüche

1. Hydraulisch wirkendes Bremssystem, mit einem Hauptbremszylinder (4) mit Vorratsbehälter (6), wobei der Hauptbremszylinder (4) zumindest einen Arbeitsraum und einen Hauptzylinder-Kolben (3) aufweist und der Arbeitsraum über mindestens eine Hydraulikleitung (BL), in der ein Regelventil (18) angeordnet ist, mit mindestens einer Radbremse (11a-11d) eines Fahrzeuges verbunden ist, wobei durch Verstellen des Hauptzylinder-Kolbens (3) ein Unterdruck im Hauptbremszylinder und der Hydraulikleitung (BL) erzeugbar ist, wobei mittels eines Druckgebers (15, 112) der Druck in der Hydraulikleitung (BL) oder im Hauptbremszylinder (4) und mittels eines Wegsensors (14) die Stellung des Hauptzylinder-Kolbens (3) ermittelbar ist, und wobei eine Steuereinrichtung (ECU) unter Berücksichtigung des ermittelten Druckes und der Stellung des Hauptzylinder-Kolbens (3) den Hauptzylinder-Kolben steuert, Hinweis: drucken ohne Unterstrich, **dadurch gekennzeichnet, dass** zum Zwecke einer definierten Lüftspieleinstellung am Bremskolben (12a-12d) bzw. an den Bremsbelägen die Steuereinrichtung (ECU) den Druck des Druckgebers (15) und den mittels des Wegsensors (14) ermittelten Verstellweg des Hauptzylinder-Kolben (3) auswertet und den Hauptzylinder-Kolben (3) und das Regelventil (18) derart steuert, dass durch den daraus resultierenden Unterdruck eine definierte Verstellung des Bremskolbens bzw. der Bremsbeläge erfolgt.

2. Hydraulisch wirkendes Bremssystem nach Anspruch 1, **dadurch gekennze**i**chnet**, dass das Bremssystem ein elektro-hydraulisches Bremssystem ist, bei dem der oder die Kolben (3, 3a) des Hauptbremszylinders (4) mittels eines elektrischen Antriebs verstellbar ist bzw. sind.

3. Hydraulisch wirkendes Bremssystem nach Anspruch 1, **dadurch gekennzeichnet, dass** das Bremssystem ein pneumatisch-hydraulisches Bremssystem ist, bei dem der Hauptbremszylinder (4) pneumatisch verstellbar ist.

4. Hydraulisch wirkendes Bremssystem nach einem der Ansprüche 1 bis 3, **dadurch gekennze**i**chnet**, dass eine Steuerung das Lüftspiel (BLS) in Abhängigkeit der Fahrsituation und/oder der Fahrbahnverhältnisse einstellt oder einregelt und insbesondere bei Regen und/oder nasser Fahrbahn kein Lüftspiel (BLS) in den Radbremsen einregelt.

5. Hydraulisch wirkendes Bremssystem nach einem der vorhergehenden Ansprüche, **dadurch gekennze**i**chnet**, dass Umschaltventile (16, 16a; 118) in den Verbindungsleitungen zwischen Vorratsbehälter (6, 106) und Arbeitsraum bzw. Arbeitsräumen des Hauptbremszylinders (4, 105) angeordnet sind.

6. Hydraulisch wirkendes Bremssystem nach einem der vorhergehenden Ansprüche, **dadurch gekennzeichnet, dass** der Unterdruck mittels eines Aggregats (14, 38, 49, 40, 41), insbesondere eines angetriebenen Kolben-Zylinder-Systems oder eines Pumpsystems erzeugbar ist, wobei das Aggregat (14, 38, 49, 40, 41) mit der Zuführleitung zu mindestens einer, insbesondere allen Radbremsen oder zumindest mit einer Zuführleitung des Hauptbremszylinders (4) in Verbindung ist, wobei die Umschaltventile (16, 16a) in den Verbindungsleitungen zwischen Vorratsbehälter (6) und Aggregat (14, 38, 49, 40, 41) angeordnet sind und jeder Radbremse ein gesteuertes Regelventil (18, 18a, 18b, 18c) zugeordnet ist, welches in der Hydraulikleitung angeordnet ist, die den Arbeitsraum des Bremskolben-Zylindersystems der Radbremse mit dem Hauptbremszylinder (4) oder dem Aggregat (14, 38, 49, 40, 41) verbindet, wobei bei verschlossenem Regelventil (18, 18a, 18b, 18c) der Bremskolben (12a, 12b, 12c, 12d) durch die eingeschlossene Hydraulikmenge in Position gehalten und das Lüftspiel (BLS) somit in der Radbremse aufrechterhalten wird.

7. Hydraulisch wirkendes Bremssystem nach einem der vorhergehenden Ansprüche, **dadurch gekennzeichnet , dass** eine Einrichtung (30; 32, 35, 36, 46) eine Kraft auf den Bremssattel (11), insbesondere den Schwimmsattel, zur Verstellung des Bremssattels (11) ausübt, derart, dass sich nach Beendigung des Bremsvorgangs ein Lüftspiel (BLS₂) bei dem an der dem Bremskolben abgewandten Seite der Bremsscheibe (59) angreifenden Bremsbelag (52) einstellt.

8. Hydraulisch wirkendes Bremssystem nach einem der vorhergehenden Ansprüche, **dadurch gekennzeichnet , dass** eine Nachfördereinrichtung (F) über eine Zuführleitung (ZL) mit einer Bremsleitung (BL) mittels eines Ventils (108) verbindbar ist.

9. Hydraulisch wirkendes Bremssystem nach Anspruch 8, **dadurch gekennzeichnet, dass** in der Verbindungsleitung (L), die einen Arbeitsraum (A₁, A₂) des Bremskraftverstärkers mit dem Vorratsbehälter (106) verbindet ein Absperrventil (118) angeordnet ist.

10. Hydraulisch wirkendes Bremssystem nach Anspruch 8 oder 9, **dadurch gekennzeichnet, dass** die Nachfördereinrichtung (F) ein Kolben-Zylinder-System mit einem federbelasteten Kolben (109), einer Feder (110) und einem Arbeitsraum (120) ist, wobei der Arbeitsraum (120) als Vorratsbehälter dient und die Feder (110) den Kolben (109) in Richtung Verkleinerung des Arbeitsraums (120) kraftbeaufschlagt.

11. Verfahren zum Betrieb eines hydraulisch wirkenden Bremssystems nach einem vorhergehenden Ansprüche, **dadurch gekennze**i**chnet,** dass ein Teil des Volumens im Hauptbremszylinder (105) in eine oder mehrere Nachförderkammer(n) (120) mittels des Hauptbremszylinders (105) bei geöffnetem Nachförderventil (108) verdrängt wird, wobei danach bei geschlossenem Nachförderventil (108) und geöffnetem Regelventil (107) die Bremskolben in den Radbremsen (RB) durch Zurückfahren der Kolben (103, 104) des Hauptbremszylinders (105) von den Bremsscheiben zur Erzielung eines Belaglüftspiels abgehoben werden.

12. Verfahren nach Anspruch 11, **dadurch gekennzeich**n e t , dass das Belaglüftspiel in den Radbremsen (RB) nacheinander oder gleichzeitig oder paarweise eingestellt wird.

13. Verfahren nach einem der Ansprüche 11 oder 12, **dadurch gekennzeichnet, dass** eine definierter Hub der Kolben (103,104) anhand des mittels eines Sensors (112) ermittelten Drucks in der Bremsleitung (BL) oder im Hauptbremszylinder (105) durchgeführt wird.

14. Verfahren nach einem der Ansprüche 11 bis 13, **dadurch** g e k e n n **zeichnet**, dass der Kolben (109) der Nachförderkammer (120) sich in einer Zwischenstellung befindet, sodass diese weiteres Volumen für die Unterdrucksteuerung oder Einstellung des Belaglüftspiels aufnehmen kann.

15. Verfahren nach einem der Ansprüche 11 bis 14, **dadurch gekennzeichnet, dass** zur Aufhebung des Bremslüftspiels die Ventile (108) geschlossen und das bzw. die Ventil(e) (107) geöffnet sind, wonach dann mittels der Kolben (103, 104) über die Bremsleitung (122) Hydraulikmedium in die Radbremse gefördert wird.

16. Verfahren zum Betrieb eines hydraulisch wirken den Bremssystems nach einem der Ansprüche 1 bis 10, **dadurch gekennzeichnet, dass** zur Erzeugung eines Lüftspiels in einer Radbremse die Verbindung zwischen Hauptbremszylinder (4) und Vorratsbehälter (6, 106) mittels eines Umschaltventils (16, 16a) geschlossen wird und durch Verstellen des Kolbens (3, 3a) des Hauptbremszylinders (4) und/oder mittels des Aggregats (14, 38, 49, 40, 41) ein Unterdruck in der Hydraulikleitung (BL) zur Radbremse erzeugt wird bzw. eine bestimmte Menge des Hydraulikmediums aus dem Arbeitsraum des Bremskolben-Zylinder-Systems der Radbremse (RB) gefördert wird.

17. Verfahren nach Anspruch 16, **dadurch gekennzeichnet, dass** nach **Erzielung** des gewünschten Lüftspiels (BLS) das der Radbremse zugeordnete Regelventil (18, 18a, 18b, 18c) zur Aufrechterhaltung des Lüftspiels (BLS) geschlossen wird.

18. Verfahren nach Anspruch 16 oder 17, **dadurch gekennze**i**chnet**, dass in den einzelnen Radbremsen ein definiertes Lüftspiel (BLS) nacheinander mittels des Hauptbremszylinders oder des Aggregats eingestellt wird.

19. Verfahren nach einem der Ansprüche 16 bis 18, **dadurch gekennzeichnet, dass** nach Einstellung des Lüftspiels der Kolben (3, 3a) des Hauptbremszylinders (4) in die Normalstellung bewegt wird und alle Ventile in die OFFEN-Stellung geschaltet werden.

20. Verfahren nach einem der Ansprüche 16 bis 19, **dadurch gekennzeichnet, dass** das Lüftspiel (BLS) in den einzelnen Radbremsen aufgehoben wird, in dem die Bremskolben durch Erzeugung eines Überdrucks in den Hydraulikleitungen derart verstellt werden, dass sich eine leichte Bremskraft durch das Anliegen der Bremsbelage an der Bremsscheibe einstellt.

21. Verfahren nach einem der Ansprüche 16 bis 20, **dadurch gekennzeichnet, dass** das Lüftspiel (BLS) in den einzelnen Radbremsen aufgehoben wird, sobald das Bremssystem anhand der Fahrsituation erkennt, dass ein Bremsvorgang unmittelbar bevorsteht.

22. Verfahren nach Anspruch 21, **dadurch gekennzeichnet, dass** anhand der Bewegung des Gaspedals, insbesondere dessen Geschwindigkeit, der Geschwindigkeit des die Bremse betätigenden Fußes, dem Abstand des das Bremspedal betätigenden Fußes relativ zum Bremspedal und/oder dem Signal eines Abstandswarnsystems das Bremssystem die bevorstehende Einleitung eines Bremsvorganges erkennt.

23. Verfahren nach Anspruch 21 oder 22, **dadurch gekennzeichnet, dass** mindestens ein Abstandssensor (7) die Entfernung des Fußes zum Bremspedal in mindestens eine, vorzugsweise in drei Richtungen ermittelt.

24. Verfahren nach einem der Ansprüche 16 bis 23, **dadurch gekennze**i**chnet**, dass die Steuerung aus dem zeitlichen Verlauf des Drucksignals die Bewegung des Bremskolbens ermittelt.

## Claims

1. Hydraulic braking system, with a master brake cylinder (4) having a reservoir (6), wherein the master brake cylinder (4) has at least one working space and a master cylinder piston (3) and the working space is connected by at least one hydraulic line (BL), in which a regulating valve (18) is arranged, to at least one wheel brake (11a-11d) of a vehicle, wherein by adjusting the master cylinder piston (3) a negative pressure can be generated in the master brake cylinder and the hydraulic line (BL), wherein the pressure in the hydraulic line (BL) or in the master brake cylinder (4) can be determined by means of a pressure sensor (15, 112) and the position of the master cylinder piston (3) can be determined by means of a path sensor (14), and wherein a controller (ECU) controls the master cylinder piston by taking into account the determined pressure and position of the master cylinder piston (3), **characterised in that** for the purpose of a defined clearance adjustment at the brake piston (12a-12d) or the brake pads, the controller (ECU) evaluates the pressure of the pressure sensor (15) and the adjustment path of the master cylinder piston (3) determined by means of the path sensor (14), and controls the master cylinder piston (3) and the regulating valve (18) in such a way that due to the negative pressure resulting therefrom a defined adjustment of the brake piston or brake pads is made.

2. Hydraulic braking system according to claim 1, **characterised in that** the braking system is an electrohydraulic braking system in which the piston(s) (3, 3a) of the master brake cylinder (4) can be adjusted by means of an electric drive.

3. Hydraulic braking system according to claim 1, **characterised in that** the braking system is a pneumatic-hydraulic braking system in which the master brake cylinder (4) can be pneumatically adjusted.

4. Hydraulic braking system according to any one of claims 1 to 3, **characterised in that** a controller adjusts or sets the clearance (BLS) as a function of the travel situation and/or the road conditions, and in particular in the case of rain and/or a wet road does not set any clearance in the wheel brakes.

5. Hydraulic braking system according to any one of the preceding claims, **characterised in that** switching valves (16, 16a; 118) are arranged in the connecting lines between reservoirs (6, 106) and working space or working spaces of the master brake cylinder (4, 105).

6. Hydraulic braking system according to any one of the preceding claims, **characterised in that** the negative pressure can be generated by means of a unit (14, 38, 49, 40, 41), in particular a driven piston-cylinder system or a pump system, wherein the unit (14, 38, 49, 40, 41) is connected to the feed line to at least one, in particular all wheel brake(s) or at least to a feed line of the master brake cylinder (4), wherein the switching valves (16, 16a) are arranged in the connecting lines between reservoir (6) and unit (14, 38, 49, 40, 41) and a controlled regulating valve (18, 18a, 18b, 18c) is associated with each wheel brake, and this is arranged in the hydraulic line which connects the working space of the brake piston cylinder system of the wheel brake to the master brake cylinder (4) or the unit (14, 38, 49, 40, 41), wherein, when the regulating valve (18, 18a, 18b, 18c) is closed, the brake piston (12a, 12b, 12c, 12d) is held in position by the enclosed amount of hydraulic and the clearance (BLS) is therefore maintained in the wheel brake.

7. Hydraulic braking system according to any one of the preceding claims, **characterised in that** a device (30; 32, 35, 36, 46) exerts a force on the brake calliper (11), in particular the floating calliper, to adjust the brake calliper (11) in such a way that at the end of the braking process a clearance (BLS₂) is adjusted at the brake pad (52) acting on the side of the brake disc (59) remote from the brake piston.

8. Hydraulic braking system according to any one of the preceding claims, **characterised in that** a supply device (F) can be connected by a feed line (ZL) to a brake line (BL) by means of a valve (108).

9. Hydraulic braking system according to claim 8, **characterised in that** a shut-off valve (118) is arranged in the connecting line (L) which connects a working space (A₁, A₂) of the brake booster to the reservoir (106).

10. Hydraulic braking system according to claim 8 or 9, **characterised in that** the supply device (F) is a piston-cylinder system with a spring-loaded piston (109), a spring (110) and a working space (120), wherein the working space (120) serves as a reservoir and the spring (110) force-actuates the piston (109) in the direction of reduction of the working space (120).

11. Method for operating a hydraulic braking system according to any one of the preceding claims, **characterised in that** some of the volume in the master brake cylinder (105) is displaced into one or more supply chamber(s) (120) by means of the master brake cylinder (105) when the supply valve (108) is open, wherein thereafter, when the supply valve (108) is closed and the regulating valve is open (107), the brake pistons in the wheel brakes (RB) are raised by withdrawal of the pistons (103, 104) of the master brake cylinder (105) from the brake discs to achieve brake pad clearance.

12. Method according to claim 11, **characterised in that** the pad clearance in the wheel brakes (RB) is adjusted successively or simultaneously or in pairs.

13. Method according to either of claims 11 or 12, **characterised in that** a defined stroke of the piston (103, 104) is carried out with the aid of the pressure, determined by means of a sensor (112), in the brake line (BL) or the master brake cylinder (105).

14. Method according to any one of claims 11 to 13, **characterised in that** the piston (109) of the supply chamber (120) is in an intermediate position, so this chamber can receive additional volume for the negative pressure control or adjustment of the pad clearance.

15. Method according to any one of claims 11 to 14, **characterised in that** to cancel the brake clearance, the valves (108) are closed and the valve(s) (107) are opened, after which hydraulic medium is conveyed into the wheel brake by means of the piston (103, 104) and by way of the brake line (122).

16. Method for operating a hydraulic braking system according to any one of claims 1 to 10, **characterised in that** to generate a clearance in a wheel brake the connection between master brake cylinder (4) and reservoir (6, 106) is closed by means of a switching valve (16, 16a) and by adjusting the piston (3, 3a) of the master brake cylinder (4) and/or by means of the unit (14, 38, 49, 40, 41) a negative pressure is generated in the hydraulic line (BL) to the wheel brake or a certain amount of the hydraulic medium is conveyed from the working space of the brake piston-cylinder system of the wheel brake (RB).

17. Method according to claim 16, **characterised in that** after achieving the desired clearance (BLS) the regulating valve (18, 18a, 18b, 18c) associated with the wheel brake is closed to maintain the clearance (BLS).

18. Method according to claim 16 or 17, **characterised in that** a defined clearance (BLS) is successively adjusted in the individual wheel brakes by means of the master brake cylinder or the unit.

19. Method according to any one of claims 16 to 18, **characterised in that** after adjusting the clearance the piston (3, 3a) of the master brake cylinder (4) is moved into the normal position and all valves are switched into the OPEN position.

20. Method according to any one of claims 16 to 19, **characterised in that** the clearance (BLS) in the individual wheel brakes is cancelled **in that** by generating a negative pressure in the hydraulic lines the brake pistons are adjusted in such a way that a slight braking force is adjusted by the abutment of the brake pad on the brake disc.

21. Method according to any one of claims 16 to 20, **characterised in that** the clearance (BLS) in the individual wheel brakes is cancelled as soon as the braking system detects with reference to the travel situation that a brake application is imminent.

22. Method according to claim 21, **characterised in that** the braking system detects the imminent initiation of a brake application with the aid of the movement of the accelerator pedal, in particular its speed, the speed of the foot actuating the brake, the distance of the foot actuating the brake pedal relative to the brake pedal and/or the signal of a distance warning system.

23. Method according to claim 21 or 22, **characterised in that** at least one distance sensor (7) determines the distance of the foot from the brake pedal in at least one, and preferably in three direction(s).

24. Method according to any one of claims 16 to 23, **characterised in that** the controller determines the movement of the brake piston from the course over time of the pressure signal.

## Revendications

1. Système de freinage agissant hydrauliquement, comprenant un maître-cylindre de freinage (4) avec un réservoir (6), système de freinage
dans lequel le maître-cylindre de freinage (4) présente au moins une chambre de travail et un piston de maître-cylindre (3), et la chambre de travail est reliée à au moins un frein de roue (11a-11d) d'un véhicule, par l'intermédiaire d'au moins une conduite hydraulique (BL) dans laquelle est agencée une vanne de régulation (18), dans lequel, par déplacement du piston de maître-cylindre (3), il est possible de produire une dépression dans le maître-cylindre de freinage et dans la conduite hydraulique (BL),
dans lequel il est possible de déterminer au moyen d'un capteur de pression (15, 112), la pression dans la conduite hydraulique (BL) ou dans le maître-cylindre de freinage (4), et, au moyen d'un détecteur de déplacement (14), la position du piston de maître-cylindre (3),
et dans lequel un dispositif de commande (ECU) commande le piston de maître-cylindre en tenant compte de la pression déterminée et de la position du piston de maître-cylindre (3),
**caractérisé en ce qu'**en vue de régler un jeu de desserrage défini au niveau du piston de frein (12a-12d), à savoir au niveau des garnitures de frein, le dispositif de commande (ECU) exploite et traite la pression du capteur de pression (15) et le déplacement de réglage du piston de maître-cylindre (3) déterminé par le détecteur de déplacement (14), et commande le piston de maître-cylindre (3) et la vanne de régulation (18) de manière telle, qu'en raison de la dépression qui en résulte, il se produise un déplacement défini du piston de frein et donc des garnitures de frein.

2. Système de freinage agissant hydrauliquement selon la revendication 1, **caractérisé en ce que** le système de freinage est un système de freinage électrohydraulique, dans lequel le ou les pistons (3, 3a) du maître-cylindre de freinage (4) peut ou respectivement peuvent être déplacés au moyen d'un entraînement électrique.

3. Système de freinage agissant hydrauliquement selon la revendication 1, **caractérisé en ce que** le système de freinage est un système de freinage pneumatique-hydraulique, dans lequel le maître-cylindre de freinage (4) peut être déplacé par voie pneumatique.

4. Système de freinage agissant hydrauliquement selon l'une des revendications 1 à 3, **caractérisé en ce qu'**une commande règle ou régule le jeu de desserrage (BLS) en fonction de la situation de marche et/ou des conditions de la voie de circulation ou de la chaussée, et notamment ne régule pas de jeu de desserrage (BLS) dans le cas de pluie et/ou de chaussée humide.

5. Système de freinage agissant hydrauliquement selon l'une des revendications précédentes, **caractérisé en ce que** des vannes d'inversion (16, 16a; 118) sont agencées dans les conduites de liaison entre le réservoir (6, 106) et la chambre de travail ou les chambres de travail du maître-cylindre de freinage (4, 105).

6. Système de freinage agissant hydrauliquement selon l'une des revendications précédentes, **caractérisé en ce que** la dépression peut être produite au moyen d'un groupe (14, 38, 49, 40, 41), notamment d'un système à cylindre et piston entraîné ou d'un système à pompe, **en ce que** le groupe (14, 38, 49, 40, 41) est en liaison avec la conduite d'alimentation d'au moins un, notamment de tous les freins de roue, ou au moins avec une conduite d'alimentation du maître-cylindre de freinage (4), **en ce que** les vannes d'inversion (16, 16a) sont agencées dans les conduites de liaison entre réservoir (6) et groupe (14, 38, 49, 40, 41), et à chaque frein de roue est associée une vanne de régulation (18, 18a, 18b, 18c) commandée, qui est agencée dans la conduite hydraulique reliant la chambre de travail du système à cylindre et piston de frein du frein de roue au maître-cylindre de freinage (4) ou au groupe (14, 38, 49, 40, 41), et **en ce que** lorsque la vanne de régulation (18, 18a, 18b, 18c) est fermée, le piston de frein (12a, 12b, 12c, 12d) est maintenu en position par la quantité hydraulique enfermée, et le jeu de desserrage (BLS) est ainsi conservé dans le frein de roue.

7. Système de freinage agissant hydrauliquement selon l'une des revendications précédentes, **caractérisé en ce qu'**un dispositif (30; 32, 35, 36, 46) exerce une force sur l'étrier de frein (11), notamment l'étrier flottant, pour le déplacement de l'étrier de frein (11), de façon telle, qu'après achèvement de la phase de freinage, il s'établisse un jeu de desserrage (BLS₂) au niveau de la garniture de frein (52) agissant sur le côté du disque de frein (59), qui est opposé à celui où se trouve le piston de frein.

8. Système de freinage agissant hydrauliquement selon l'une des revendications précédentes, **caractérisé en ce qu'**un dispositif de réalimentation (F) peut être relié, au moyen d'une vanne (108), par l'intermédiaire d'une conduite d'alimentation (ZL), à une conduite de frein (BL).

9. Système de freinage agissant hydrauliquement selon la revendication 8, **caractérisé en ce que** dans la conduite de liaison (L), qui relie une chambre de travail (A₁, A₂) de l'amplificateur de force de freinage au réservoir (106), est agencée une vanne d'arrêt (118).

10. Système de freinage agissant hydrauliquement selon la revendication 8 ou la revendication 9, **caractérisé en ce que** le dispositif de réalimentation (F) est un système à piston et cylindre comprenant un piston (109) chargé par ressort, un ressort (110), et une chambre de travail (120), la chambre de travail (120) servant de réservoir et le ressort (110) sollicitant par une force le piston (109) en direction d'une diminution de la chambre de travail (120).

11. Procédé pour faire fonctionner un système de freinage agissant hydrauliquement selon l'une des revendications précédentes, **caractérisé en ce qu'**une partie du volume dans le maître-cylindre de freinage (105) est refoulée, au moyen du maître-cylindre de freinage (105), dans une ou plusieurs chambre(s) de réalimentation (120), lorsque la vanne de réalimentation (108) est ouverte, les pistons de frein dans les freins de roue (RB) étant ensuite, lorsque la vanne de réalimentation (108) est fermée et la vanne de régulation (107) ouverte, dégagés des disques de frein en vue d'obtenir un jeu de desserrage des garnitures, par le retour en arrière des pistons (103, 104) du maître-cylindre de freinage (105).

12. Procédé selon la revendication 11, **caractérisé en ce que** le jeu de desserrage des garnitures dans les freins de roue (RB) est réglé successivement, ou simultanément, ou par paires.

13. Procédé selon l'une des revendications 11 ou 12, **caractérisé en ce qu'**une course définie des pistons (103, 104) est effectuée au regard de la pression déterminée au moyen d'un capteur (112) dans la conduite de frein (BL) ou dans le maître-cylindre de freinage (105).

14. Procédé selon l'une des revendications 11 à 13, **caractérisé en ce que** le piston (109) de la chambre de réalimentation (120) se trouve dans une position intermédiaire, de sorte que cette chambre est en mesure d'absorber un volume supplémentaire pour la commande de dépression ou le réglage du jeu de desserrage des garnitures.

15. Procédé selon l'une des revendications 11 à 14, **caractérisé en ce que** pour supprimer le jeu de desserrage des garnitures, les vannes (108) sont fermées et la ou les vanne(s) (107) ouvertes, suite à quoi du fluide hydraulique est alors refoulé dans le frein de roue, au moyen des pistons (103, 104), par l'intermédiaire de la conduite de frein (122).

16. Procédé pour faire fonctionner un système de freinage agissant hydrauliquement selon l'une des revendications 1 à 10, **caractérisé en ce que** pour produire un jeu de desserrage dans un frein de roue, on ferme la liaison entre le maître-cylindre de freinage (4) et le réservoir (6, 106) au moyen d'une vanne d'inversion (16, 16a), et, par déplacement du piston (3, 3a) du maître-cylindre de freinage (4) et/ou au moyen du groupe (14, 38, 49, 40, 41), on produit une dépression dans la conduite hydraulique (BL) allant au frein de roue, à savoir on refoule une quantité déterminée du fluide hydraulique hors de la chambre de travail du système à cylindre et piston de frein du frein de roue (RB).

17. Procédé selon la revendication 16, **caractérisé en ce qu'**après obtention du jeu de desserrage (BLS) souhaité, on ferme la vanne de régulation (18, 18a, 18b, 18c) associée au frein de roue, pour conserver le jeu de desserrage (BLS).

18. Procédé selon la revendication 16 ou la revendication 17, **caractérisé en ce qu'**un jeu de desserrage (BLS) défini est réglé successivement dans les freins de roue individuels au moyen du maître-cylindre de freinage ou du groupe.

19. Procédé selon l'une des revendications 16 à 18, **caractérisé en ce qu'**après réglage du jeu de desserrage, le piston (3, 3a) du maître-cylindre de freinage (4) est déplacé dans la position normale, et toutes les vannes sont commutées dans la position OUVERTE.

20. Procédé selon l'une des revendications 16 à 19, **caractérisé en ce que** le jeu de desserrage (BLS) est supprimé dans les freins de roue individuels grâce au fait que les pistons de frein, par la production d'une pression dans les conduites de frein, sont déplacés de manière à ce qu'il s'établisse une légère force de freinage par l'application des garnitures de frein contre le disque de frein.

21. Procédé selon l'une des revendications 16 à 20, **caractérisé en ce que** le jeu de desserrage (BLS) est supprimé dans les freins de roue individuels, dès que le système de freinage détecte, au regard de la situation de marche, qu'une phase de freinage est imminente.

22. Procédé selon la revendication 21, **caractérisé en ce que** le système de freinage détecte l'imminence du déclenchement d'une phase de freinage, au regard du mouvement de la pédale d'accélération, notamment de sa vitesse, de la vitesse du pied actionnant le frein, de la distance du pied actionnant la pédale de frein à cette pédale de frein, et/ou du signal d'un système de sécurité de radar de détection d'obstacle.

23. Procédé selon la revendication 21 ou la revendication 22, **caractérisé en ce qu'**au moins un détecteur de proximité (7) détermine la distance du pied à la pédale de frein, dans au moins une direction, de préférence dans trois directions.

24. Procédé selon l'une des revendications 16 à 23, **caractérisé en ce que** la commande détermine le mouvement du piston de frein à partir de la loi de variation dans le temps du signal de pression.
